# EUROPEAN PATENT SPECIFICATION

(11) **EP 4 343 903 B1**
(45) Date of publication and mention of the grant of the patent: **17.12.2025**
(21) Application number: 22858672.3
(22) Date of filing: 11.08.2022
(51) Int. Cl.: H01M 10/04, H01M 4/04, B65H 35/06, B26D 5/00, B26D 7/02, B26D 1/06, B26D 1/08

(54) **ELECTRODE CUTTING DEVICE AND CELL MANUFACTURING DEVICE COMPRISING SAME**
ELEKTRODENSCHNEIDEVORRICHTUNG UND ZELLHERSTELLUNGSVORRICHTUNG DAMIT
DISPOSITIF DE DÉCOUPE D'ÉLECTRODE ET DISPOSITIF DE FABRICATION DE CELLULE LE COMPRENANT

(30) Priority: 18.08.2021 KR 20210108477
(43) Date of publication of application: 27.03.2024
(73) Proprietor: LG Energy Solution, Ltd., Seoul 07335 (KR)
(72) Inventor: HWANG, Taemin, Daejeon 34122 (KR); HWANG, Hong Ju, Daejeon 34122 (KR); LEE, Jin Soo, Daejeon 34122 (KR); LEE, Youngsoo, Daejeon 34122 (KR); KEUM, Dongyeon, Daejeon 34122 (KR); SO, Heeyoung, Daejeon 34122 (KR); HA, Hwimyeong, Daejeon 34122 (KR)
(74) Representative: Plasseraud IP
(86) International application number: PCT/KR2022/011986
(87) International publication number: WO 2023/022434

(56) References cited:
- KR-A- 20190 091 745
- KR-A- 20190 092 019
- KR-A- 20190 134 068
- KR-A- 20210 058 170
- KR-B1- 102 257 083

## Description

### [Technical Field]

The present disclosure relates to an electrode cutting device and a cell manufacturing device comprising the same.

### [Background Art]

As technology development and demand for mobile devices increase, a rechargeable secondary battery is being widely used as an energy source for various mobile devices. Further, the secondary battery is also attracting attention as an energy source for an electric vehicle, a hybrid vehicle, or the like, which have been proposed as a way to solve the air pollution or the like due to a conventional gasoline vehicle or diesel vehicle.

The secondary battery is classified into a coin-type battery, a cylindrical battery, a prismatic battery, and a pouch-type battery according to the shape of the battery case. In general, an electrode assembly embedded in the battery case is classified into a jelly-roll type in which a separator is interposed between a positive electrode and a negative electrode and is wound, a stack type in which a plurality of unit cells with a separator interposed between a positive electrode and a negative electrode is stacked, and a stack/folding type in which unit cells are wound with a separation film.

The unit cell in the stack type electrode assembly may be manufactured by stacking the separator on each of the upper surface and the lower surface of the cut central electrode, and additionally stacking a cut upper electrode and/or a cut lower electrode onto the separator. At this time, as the misalignment of the electrode during the driving, a planned cutting line of the central electrode, upper electrode, and/or the lower electrode may not coincide with an actual cutting line. Further, due to the misalignment of the electrode at the time of matching, the alignment of the electrodes in the matched cell may be misaligned.

### [Prior Art Document]

### [Patent Document]

(Patent Document 1) Korean Patent Laid-Open Publication No. 10-2021-0058170

### [Disclosure]

### [Technical Problem]

One of the objects of the present disclosure is to provide a cutter capable of adjusting a cutting angle.

Another object of the present disclosure is to improve a precision of an electrode cutting position.

Yet another object of the present disclosure is to improve an alignment of electrodes in a matched cell.

Yet another object of the present disclosure is to improve a process efficiency by automatically adjusting the cutting angle.

### [Technical Solution]

One embodiment of the present invention relates to an electrode cutting device, including: a transfer unit that transfers an electrode; a vision unit that measures a misaligned angle of the electrode; a cutting unit including a cutter that cuts the electrode; and a control unit that controls the cutter, wherein the control unit adjusts a cutting angle of the cutter based on the misaligned angle of the electrode measured by the vision unit, wherein the cutting angle of the cutter is an angle formed by a blade of the cutter and an imaginary line perpendicular to a transfer direction of the electrode on a plane.

Another embodiment of the present invention relates to a cell manufacturing device, including: a first electrode cutting unit that cuts a first electrode; a first matching unit that matches the cut first electrode with a separator to form a first matched product; a second electrode cutting unit that cuts a second electrode; and a second matching unit that matches the cut second electrode with the first matched product to form a second matched product, wherein at least one of the first electrode cutting unit and the second electrode cutting unit includes the electrode cutting device.

### [Advantageous Effects]

As one effect of the present disclosure, it is possible to provide a cutter capable of adjusting a cutting angle.

As another effect of the present disclosure, it is possible to improve the precision of an electrode cutting position.

As yet another effect of the present disclosure, it is possible to improve the alignment of electrodes in a matched cell.

As yet another effect of the present disclosure, it is possible to improve the process efficiency by automatically adjusting the cutting angle.

### [Description of Drawings]

FIG. 1 is a schematic side view of a cell manufacturing device according to an embodiment of the present invention.
FIG. 2 is an enlarged plan view of an electrode according to an embodiment of the present invention.
FIGS. 3A and 3B are plan views illustrating a cutting angle of a cutter according to an embodiment of the present invention.
FIG. 4 is a plan view illustrating a driving method of a cutting unit according to an embodiment of the present invention.
FIGS. 5A and 5B are plan views illustrating a matching vision unit according to an embodiment of the present invention.

### [Detailed Description]

Hereinafter, embodiments of the present invention will be described in detail with reference to accompanying drawings. In the drawings, all or a part of each configuration may be exaggerated for convenience of description.

In this specification, the width direction W, the longitudinal direction L, and the thickness direction T will be described with the transfer direction of the electrode as the longitudinal direction L. Further, unless otherwise stated, in the present specification, a plane refers to a WL plane formed by a straight line in the width direction W and a straight line in the longitudinal direction L. The thickness direction T refers to a direction perpendicular to the WL plane.

A cell manufacturing device according to an embodiment of the present invention includes: a first electrode cutting unit 110 that cuts a first electrode 11; a first matching unit 210 that matches the cut first electrode 11 with separators 21 and 22 to form a first matched product 31; a second electrode cutting unit 310 that cuts a second electrode 12; and a second matching unit 410 that matches the cut second electrode 12 with the first matched product 31 to form a second matched product 32.

At least one of the first electrode cutting unit 110 and the second electrode cutting unit 310 includes an electrode cutting device according to an embodiment of the present invention. The electrode cutting device according to the embodiment of the present invention includes transfer units 111 and 311 to transfer electrodes 11 and 12; vision units 112 and 312 to measure a misaligned angle of the electrode 11 and 12; cutting units 113 and 313 including cutters 113c and 313c that cut the electrodes 11 and 12; and control units 114 and 314 to control the cutters 113c and 313c.

The transfer units 111 and 311 transfer the electrodes 11 and 12. For example, the transfer units 111 and 311 may be a conveyor belt. At this time, the transfer units 111 and 311 may transfer the electrodes 11 and 12 so that the electrodes 11 and 12 sequentially pass through a region measured by the vision units 112 and 312 and a region cut by the cutting units 113 and 313.

The vision units 112 and 312 measure the electrodes 11 and 12, and especially, measure the misaligned angle of the electrodes 11 and 12. The vision units 112 and 312 include a vision device such as a camera, an X-ray device, or the like.

The cutting units 113 and 313 cut an electrode sheet into an individual electrode. For convenience of description, in the specification, the electrode sheet and the individual electrode formed by cutting the electrode sheet are referred to as the electrodes 11 and 12 without distinguishing the terms from each other. The cutters 113c and 313c of the cutting units 113 and 313 may be a knife, a wheel, or the like, and may have a blade which is a region that is brought in contact with the electrodes 11 and 12 directly and performs the cutting. The cutters 113c and 313c may be lowered in the thickness direction T so that the blade cuts the electrodes 11 and 12, or may be lowered in the thickness direction T and then slide in the width direction W so that the blade cuts the electrodes 11 and 12. However, the cutting method of the blade is not limited to the method described above.

The control units 114 and 314 control the cutters 113c and 313c. For example, the control units 114 and 314 may calculate the moving distance, the moving direction, the cutting angle, or the like of the cutters 113c and 313c, and control the cutters 113c and 313c accordingly.

The control units 114 and 314 may adjust the cutting angle of the cutters 113c and 313c based on the misaligned angle measured by the vision units 112 and 312. At this time, the cutting angle of the cutters 113c and 313c is an angle formed by the blade of the cutters 113c and 313c and the imaginary line perpendicular to the transfer directions of the electrodes 11 and 12 on a plane. The electrode cutting device according to the embodiment of the present invention may improve the precision of the cutting angle by introducing the control units 114 and 314, and may increase the process efficiency by applying an automatic adjustment of the cutting angle.

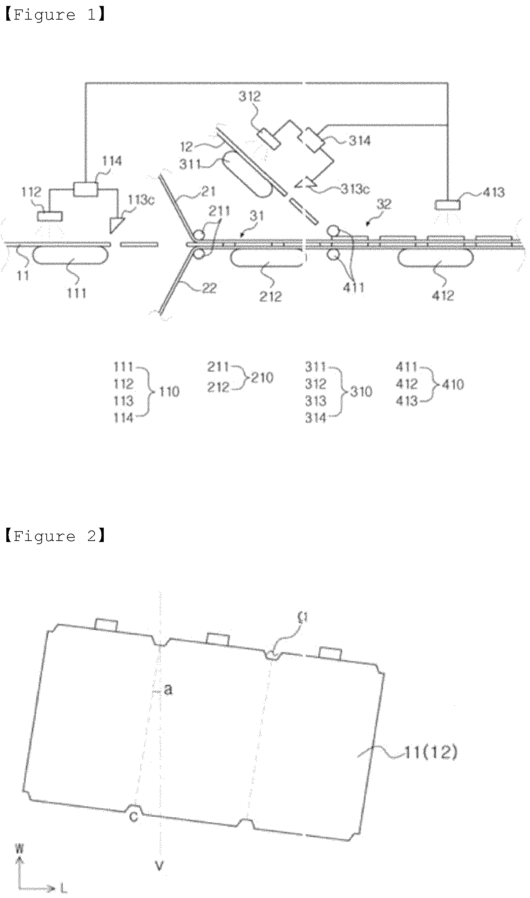

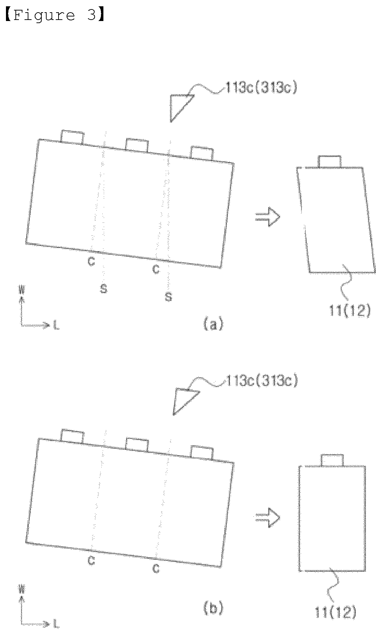

Hereinafter, the vision units 112 and 312, the cutting units 113 and 313, and the control units 114 and 314 will be described in detail with reference to FIGS. 2 and 3A and 3B.

Referring to FIG. 2, the vision units 112 and 312 may measure an angle (a) formed by a planned cutting line (c) of the electrodes 11 and 12 and an imaginary line (v) perpendicular to the transfer direction L of the electrodes 11 and 12 on a plane so as to measure the misaligned angle of the electrodes 11 and 12. The planned cutting line (c) refers to a line serving as a cutting target when cutting the electrode sheet into an individual electrode. It is preferable for the planned cutting line (c) to coincide with an actual cutting line, but the planned cutting line (c) may not coincide with the actual cutting line.

Meanwhile, in order to clearly indicate and recognize the position where the electrodes 11 and 12 are cut, a groove (g) may be formed at each of both end portions of the electrodes 11 and 12. As illustrated in the drawings, the both end portions of the electrodes 11 and 12 refer to both end portions that intersect a straight line extending the planned cutting line (c) of the electrodes 11 and 12. In other words, the both end portions of the electrodes 11 and 12 refer to both end portions in the width direction W perpendicular to the transfer direction L of the electrodes 11 and 12 on a plane when the electrodes 11 and 12 are in an aligned state, which is not misaligned. At this time, the planned cutting line (c) may be an imaginary line that connects the groove (g) formed at each of the both end portions of the electrodes 11 and 12. Therefore, the vision units 112 and 312 may recognize the planned cutting line (c) using the center of the groove (g) formed at each of the both end portions of the electrodes 11 and 12. When the planned cutting line is recognized by measuring a distance between taps (regions that protrude from one end portion) of the electrodes 11 and 12 and a length of the tap of the electrodes 11 and 12, it is difficult to recognize the accurate position when the tap of the electrodes 11 and 12 is damaged. However, as the embodiment of the present invention, when the planned cutting line (c) is recognized using the groove (g) formed at the electrodes 11 and 12, the problem mentioned above may be prevented.

Furthermore, the vision units 112 and 312 may further measure other information of the electrodes 11 and 12. For example, at one end portion where the tap of the electrodes 11 and 12 protrudes, the vision units 112 and 312 may measure at least one of a distance between the grooves (g), a distance between a side of the tap of the electrodes 11 and 12 and the groove (g), and a distance (length of the tap) between both sides of the tap of the electrodes 11 and 12. Further, at one end portion of the electrodes 11 and 12, the vision units 112 and 312 may measure at least one of the misalignment between a reference driving line of the electrodes 11 and 12 and an actual driving line of the electrodes 11 and 12, and a distance between a center line of the tap of the electrodes 11 and 12 and the groove (g). Here, the reference driving line of the electrodes 11 and 12 may be a line along the longitudinal direction L, and the actual driving line may be a lone along the one end portion of the electrodes 11 and 12. Further, the center line of the tap of the electrodes 11 and 12 may be a line perpendicular to the one end portion of the electrodes 11 and 12. Additionally, the vision units 112 and 312 may inspect whether there is a metal foil between shoulder lines that are extending lines of boundary lines of a region coated with an active material and a region not coated with the active material on the one end portion and the tap of the electrodes 11 and 12. Through this, it is possible to check the state of the electrodes 11 and 12, such as whether the groove (g) is defective, whether the tap is defective, whether the electrode is misaligned, or the like.

FIG. 3A illustrates a case where the electrodes 11 and 12 are cut by using the cutters 113c and 313c with the cutting angle not adjusted. As illustrated in the drawing, when the electrodes 11 and 12 are driven in a state of being misaligned with the transfer direction L of the electrode, the planned cutting line (c) of the electrode may be misaligned with the cutting line (s) of the cutters 113c and 313c. Therefore, the electrodes 11 and 12 are cut into a shape such as a parallelogram, a rhombus, or the like, and there is a problem in that a cutting defect occurs.

FIG. 3B illustrates a case where the electrodes 11 and 12 are cut by using the cutters 113c and 313c with the cutting angle adjusted. The control units 114 and 314 may control the cutting angle of the cutters 113c and 313c so that the cutters 113c and 313c cut the planned cutting line (c) of the electrodes 11 and 12. Specifically, the control units 114 and 314 may adjust the cutting angle of the cutters 113c and 313c by the misaligned angle of the electrodes 11 and 12 so that the cutters 113c and 313c can cut the planned cutting line (c) of the electrodes. Therefore, even when the electrodes 11 and 12 are driven in a state of being misaligned with respect to the transfer direction L of the electrodes, it is possible to cut along the planned cutting line (c) of the electrodes. Therefore, the electrodes 11 and 12 can be cut in a shape such as a rectangular shape, and a cutting defect problem may be prevented.

Referring to FIG. 1 again, the first matching unit 210 may include a nip roller 211 that matches the cut first electrode 11 and the separators 21 and 22, and a transfer unit 212 that transfer the first matched product 31. Meanwhile, in the drawing, the first matching unit 210 that matches the first electrode 11 and the separators 21 and 22 disposed on both surfaces of the first electrode 11 is illustrated, but the number of the electrodes and/or the separators that are matched by the first matching unit 210, the arrangement form, or the like is not particularly limited.

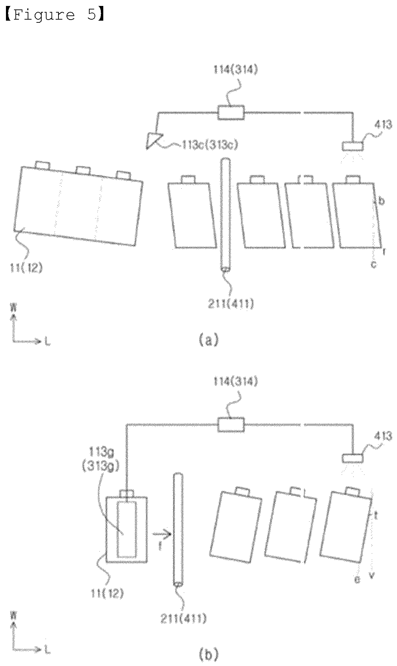

The second matching unit 410 may include a nip roller 411 that matches the first matched product 31 including the first electrode 11 and the separators 21 and 22 and the cut second electrode 12, and a transfer unit 412 that transfers the second matched product 32. In particular, the second matching unit 410 may include a matching vision unit 413 that measures at least one of the first electrode 11 and the second electrode 12. The matching vision unit 413 will be described in detail later with reference to FIGS. 5A and 5B.

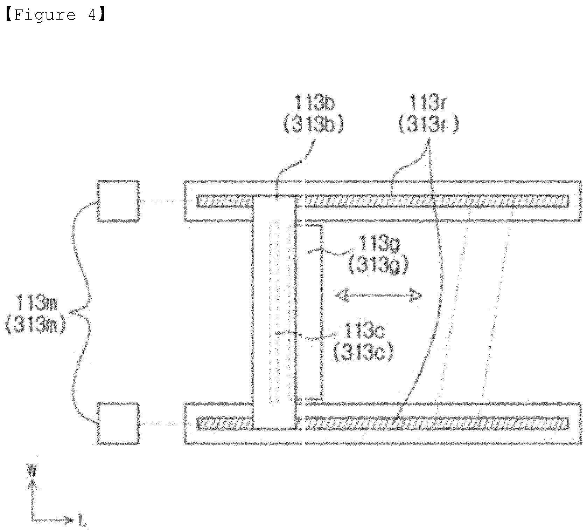

FIG. 4 is a plan view illustrating a driving method of the cutting unit according to the embodiment of the present invention.

The cutting units 113 and 313 may include a first rail 113r and a second rail 313r spaced apart from each other in the width direction W that is the direction perpendicular to the transfer direction L of the electrodes 11 and 12 on a plane, bodies 113b and 313b disposed between the first rail 113r and the second rail 313r and connected to each of the first rail 113r and the second rail 313r, the cutters 113c and 313c disposed on the bodies 113b and 313b to cut the electrodes 11 and 12, grippers 113g and 313g disposed on the bodies 113b and 313b to fix the electrodes 11 and 12, and a first motor 113m and a second motor 313m that each supplies power so as to move the bodies 113b and 313b on each of the first rail 113r and the second rail 313r. However, FIG. 4 merely illustrates a shape that the cutting units 113 and 313 may have as an example, and the shape of the cutting units 113 and 313 is not limited to the shape illustrated in the drawing.

The first rail 113r and the second rail 313r are disposed to be spaced apart from each other in the width direction W that is the direction perpendicular to the transfer direction L of the electrodes 11 and 12 on a plane. At this time, each of the first rail 113r and the second rail 313r may be disposed along the transfer direction L of the electrodes 11 and 12.

The bodies 113b and 313b are disposed between the first rail 113r and the second rail 313r and are connected to each of the first rail 113r and the second rail 313r. The bodies 113b and 313b may have a structure extending from the first rail 113r to the second rail 313r. Specifically, one end portion of the bodies 113b and 313b is connected to the first rail 113r and the other end portion is connected to the second rail 313r so as to movable on each of the first rail 113r and the second rail 313r. The shape of the bodies 113b and 313b is not limited, but may have a shape similar to a shape of a letter "C" rotated by 90° in a clockwise direction when viewed in the longitudinal direction L.

At this time, the bodies 113b and 313b are connected to each of the first motor 113m and the second motor 313m, which are individual motors. Therefore, the bodies 113b and 313b may independently move on each of the first rail 113r and the second rail 313r by each of the first motor 113m and the second motor 313m. For example, the moving distance of the bodies 113b and 313b on the first rail 113r may be different from the moving distance of the bodies 113b and 313b on the second rail 313r. At this time, by applying a hinge structure in a corner region of the bodies 113b and 313b, it is possible to make the moving distances of the bodies 113b and 313b on each of the first rail 113r and the second rail 313r different from each other.

The cutters 113c and 313c are disposed on the bodies 113b and 313b and connected to the bodies 113b and 313b. Therefore, when the bodies 113b and 313b move on the first rail 113r and the second rail 313r, the cutters 113c and 313c may also move together with the bodies 113b and 313b. Specifically, the cutters 113c and 313c are disposed in a direction directed from the one end of the bodies 113b and 313b to the other end on a plane such that the blade of the cutters 113c and 313c is directed to the width direction W as a reference before the cutting angle adjustment. Therefore, the body 313b may be moved on the first rail 113r and the second rail 313r to control the cutting angle of the cutters 113c and 313c.

The grippers 113g and 313g are disposed on the bodies 113b and 313b and connected to the bodies 113b and 313b, and may serve a role of fixing the electrodes 11 and 12. Specifically, the electrodes 11 and 12 are fixed by the grippers 113g and 313g before being cut, and then cut by the cutters 113c and 313c. Further, as will be described later, the gripper 113g and 313g may serve a role of feeding the electrodes 11 and 12. When the bodies 113b and 313b move on the first rail 113r and the second rail 313r, the grippers 113g and 313g connected to the bodies 113b and 313b may also move together with the bodies 113b and 313b. At this time, the grippers 113g and 313g may be disposed side by side with the cutters 113c and 313c in the direction directed from the one end of the bodies 113b and 313b to the other end on a plane. The grippers 113g and 313g may be lowered in the thickness direction T to apply a predetermined pressure to the electrodes 11 and 12 to fix the electrodes 11 and 12, but are not limited thereto.

Meanwhile, as illustrated in the drawing, the cutting unit may have a structure in which the cutters 113c and 313c and the grippers 113g and 313g are disposed on the bodies 113b and 313b. Therefore, when the bodies 113b and 313b move on the first rail 113r and the second rail 313r, the cutters 113c and 313c and the grippers 113g and 313g may also move together, and the cutting angle of the cutters 113c and 313c and the feeding angle (to be described later) of the gripper 113g and 313g may be easily controlled.

FIGS. 5A and 5B are plan views illustrating the matching vision unit according to the embodiment of the present invention.

The matching vision unit 413 measures at least one of the cutting angle and the misaligned angle of each of the first electrode 11 and the second electrode 12 of the second matched product 32. When it is recognized that the cutting of the measured electrodes 11 and 12 is misaligned, the matching vision unit 413 measures the cutting angle of the electrodes 11 and 12, and when it is recognized that the alignment of the electrodes 11 and 12 is misaligned, the misaligned angle of the electrodes 11 and 12 may be measured. The matching vision unit 413 may also include a vision device, and for example, may include a vision device such as a camera, an X-ray device, or the like.

Referring to FIG. 5A, the matching vision unit 413 can measure the cutting angle of each of the first electrode 11 and the second electrode 12 of the second matched product 32. For example, the matching vision unit 413 may measure an angle (b) formed by the planned cutting line (c) and an actual cutting line (r) of each of the first electrode 11 and the second electrode 12 so as to measure the cutting angle of each of the first electrode 11 and the second electrode 12.

The control unit 114 of the electrode cutting device included in the first electrode cutting unit 110 may adjust the cutting angle of the cutter 113c included in the first electrode cutting unit 110 additionally based on the cutting angle of the first electrode 11 measured by the matching vision unit 413. In other words, the control unit 114 of the electrode cutting device included in the first electrode cutting unit 110 may calculate and adjust the cutting angle of the cutter 113c included in the first electrode cutting unit 110 based on the misaligned angle of the first electrode 11 measured by the vision unit 112 and the cutting angle of the first electrode 11 measured by the matching vision unit 413.

Similarly, the control unit 314 of the electrode cutting device included in the second electrode cutting unit 310 may further adjust the cutting angle of the cutter 313c included in the second electrode cutting unit 310 additionally based on the cutting angle of the second electrode 12 measured by the matching vision unit 413. In other words, the control unit 314 of the electrode cutting device included in the second electrode cutting unit 310 may calculate and adjust the cutting angle of the cutter 313c included in the second electrode cutting unit 310 based on the misaligned angle of the second electrode 12 measured by the vision unit 312 and the cutting angle of the second electrode 12 measured by the matching vision unit 413.

Meanwhile, as described above, the control units 114 and 314 may control the cutters 113c and 313c based on the misaligned angle measured by the vision units 112 and 312. However, after the adjustment, the cutting line of the cutters 113c and 313c may still not overlap with the planned cutting line (c) and may be misaligned with each other. According to the embodiment of the present invention, the matching vision unit 413 measures the actual cutting angle of each of the first electrode 11 and the second electrode 12 after being cut, and additionally adjusts the cutting angle of the cutters 113c and 313c, and thus, the precision of the cutting angle may be further improved.

Referring to FIG. 5B, the matching vision unit 413 can measure the misaligned angle of each of the first electrode 11 and the second electrode 12 of the second matched product 32. Through this, the matching vision unit 413 can measure the alignment state of each of the first electrode 11 and the second electrode 12 of the second matched product 32. For example, the matching vision unit 413 may measure an angle (t) formed by the imaginary line (v) perpendicular to the transfer direction L of the second matched product 32 and a side (e) that connects both end portions of each of the first electrode 11 and the second electrode 12 on a plane so as to measure the misaligned angle of each of the first electrode 11 and the second electrode 12.

Meanwhile, the cutting unit 113 of the electrode cutting device included in the first electrode cutting unit 110 may further include the first gripper 113g that fixes the first electrode 11 and feed the cut first electrode 11 to the first matching unit 210. The control unit 114 of the electrode cutting device included in the first electrode cutting unit 110 may adjust the feeding angle of the first gripper 113g by the misaligned angle of the first electrode 11 measured by the matching vision unit 413. Here, the feeding angle refers to an angle formed by the side (e) that connects the both end portions of the first electrode 11 fixed by the first gripper 113g and an imaginary line perpendicular to a feeding direction (f) of the first electrode 11 on a plane. In this specification, the feeding direction (f) refers to the moving direction of the electrode that is fed. When the cutting unit 113 of the electrode cutting device included in the first electrode cutting unit 110 has the structure illustrated in FIG. 4, the body 113b may be moved on the first rail and the second rail 313r so that the feeding angle of the first gripper 113g may be controlled. In other words, the feeding angle of the first gripper 113g may be adjusted by adjusting the angle formed by a central axis of the first gripper 113g and the imaginary line perpendicular to the feeding direction (f) of the first electrode 11 on a plane. Here, the central axis of the first gripper 113g refers to an axis in a direction directed from the first rail to the second rail 313r.

The control unit 114 of the electrode cutting device included in the first electrode cutting unit 110 may also adjust the angle of the first electrode 11 supplied to the transfer unit 111 included in the first electrode cutting unit 110 based on the misaligned angle of the first electrode 11 measured by the matching vision unit 413. For example, when it is measured to be a state where both the first electrode 11 measured by the vision unit 114 of the electrode cutting device included in the first electrode cutting unit 110 and the first electrode 11 measured by the matching vision unit 413 are misaligned, the angle of the first electrode 11 supplied to the transfer unit 111 included in the first electrode cutting unit 110, which is an initial introducing position of the first electrode 11, may be adjusted.

Similarly, the cutting unit 313 of the electrode cutting device included in the second electrode cutting unit 310 may further include the second gripper 313g that fixes the second electrode 12 and feed the cut second electrode 12 to the second matching unit 410. The control unit 314 of the electrode cutting device included in the second electrode cutting unit 310 may adjust the feeding angle of the second gripper 313g by the misaligned angle of the second electrode 12 measured by the matching vision unit 413. Here, the feeding angle refers to an angle formed by the side (e) that connects the both end portions of the second electrode 12 fixed by the second gripper 313g and the imaginary line perpendicular to the feeding direction (f) of the second electrode 12 on a plane. When the cutting unit 313 of the electrode cutting device included in the second electrode cutting unit 310 has the structure illustrated in FIG. 4, the body 313b may be moved on the first rail and the second rail 313r so that the feeding angle of the second gripper 313g may be controlled. In other words, the feeding angle of the second gripper 313g may be adjusted by adjusting the angle formed by a central axis of the second gripper 313g and the imaginary line perpendicular to the feeding direction (f) of the second electrode 12 on a plane. Here, the central axis of the second gripper 313g refers to an axis in a direction directed from the first rail to the second rail 313r.

The control unit 314 of the electrode cutting device included in the second electrode cutting unit 310 may also adjust the angle of the second electrode 12 supplied to the transfer unit 311 included in the second electrode cutting unit 310 based on the misaligned angle of the second electrode 12 measured by the matching vision unit 413. For example, when it is measured to be a state where both the second electrode 12 measured by the vision unit 314 of the electrode cutting device included in the second electrode cutting unit 310 and the second electrode 12 measured by the matching vision unit 413 are misaligned, the angle of the second electrode 12 supplied to the transfer unit 311 included in the second electrode cutting unit 310, which is an initial introducing position of the second electrode 12, may be adjusted.

Meanwhile, the alignment of the first electrode 11 and/or the second electrode 12 may be misaligned in the matching process. For example, due to the imbalance of the pressure applied to each region of the first electrode 11 and/or the second electrode 12 by a pair of rollers while passing through the nip rollers 211 and 411, the alignment of the first electrode 11 and/or the second electrode 12 may be misaligned. According to the embodiment of the present invention, the matching vision unit 413 may measure the misaligned angle of each of the first electrode 11 and the second electrode 12 and adjust the feeding angle of each of the first electrode 11 and the second electrode 12, and thus, it is possible to improve the alignment of the first electrode 11 and the second electrode 12 in the matched cell. Alternatively, by adjusting the angle of the first electrode 11 and the second electrode 12 supplied to the transfer units 111 and 311, it is possible to improve the state where the first electrode 11 and the second electrode 12 are introduced and transferred in a misaligned state.

Meanwhile, the matching vision unit 413 can measure the position of at least one of the first electrode 11 and the second electrode 12. For example, the matching vision unit 413 can measure the position in the width direction W of at least one of the first electrode 11 and the second electrode 12. Therefore, the control unit 114 of the electrode cutting device included in the first electrode cutting unit 110 may also adjust the position in the width direction W of the first electrode 11 supplied to the transfer unit 111 included in the first electrode cutting unit 110 based on the position of the first electrode 11 measured by the matching vision unit 413. At this time, the position of the first electrode 11 supplied to the transfer unit 111 may be adjusted by an edge position control (EPC) device, and the control unit 114 may control the EPC device. Similarly, the control unit 314 of the electrode cutting device included in the second electrode cutting unit 310 may also adjust the position in the width direction W of the second electrode 12 supplied to the transfer unit 311 included in the second electrode cutting unit 310 based on the position of the second electrode 12 measured by the matching vision unit 413. At this time, the position of the second electrode 12 supplied to the transfer unit 311 may be adjusted by the edge position control (EPC) device, and the control unit 314 may control the EPC device.

In the above, the embodiment of the present invention has been described by way of example, but it is not intended to limit the embodiment of the present invention to the above-described embodiment. A person skilled in the art may appropriately modify and implement the embodiment of the present invention by omitting, changing, or substituting all or a part of the configuration of the present invention, or adding other configurations with reference to the present specification and the accompanying drawings within a scope of the present invention as defined by the claims.

In this specification, the order numbers such as the first, the second, or the like are for distinguishing the components from each other, but do not mean a priority between the components or an absolute order number. A first component in a part of the present specification may be referred to as a second component in another part of the present specification.

The terms and expressions in this specification should be interpreted broadly and not in a limiting sense. In this specification, the expression "including" does not exclude the presence or addition of one or more other components other than the stated components. In this specification, the singular expression includes the plural unless it is explicitly excluded in the context. Further, each embodiment may be combined to each other, and unless contradicted, the contents described in a specific embodiment may also be applied to other embodiments.

### [Description of Symbol]

11, 12: Electrode
21, 22: Separator
31, 32: Matched product
110, 310: Electrode cutting unit
111, 311: Transfer unit
112, 312: Vision unit
113, 313: Cutting unit
114, 314: Control unit
210, 410: Matching unit
211, 411: Nip roller
212, 412: Transfer unit
413: Matching vision unit
C: Planned cutting line

## Claims

1. An electrode cutting device, comprising:
a transfer unit (111, 311) configured to transfer an electrode (11, 12);
a vision unit (112, 312) configured to measure a misaligned angle of the electrode (11, 12);
a cutting unit (113, 313) including a cutter (113c, 313c) configured to cut the electrode (11, 12); and
a control unit (114, 314) configured to control the cutter (113c, 313c),
wherein the control unit (114, 314) is configured to adjust a cutting angle of the cutter (113c, 313c) based on the misaligned angle of the electrode (11, 12), wherein
the cutting angle of the cutter (113c, 313c) is an angle formed by a blade of the cutter (113c, 313c) and an imaginary line perpendicular to a transfer direction of the electrode.

2. The electrode cutting device according to claim 1, wherein the vision unit 112, 312) is configured to measure an angle formed by a planned cutting line (C) of the electrode (11, 12) and the imaginary line perpendicular to the transfer direction of the electrode (11, 12) to measure the misaligned angle of the electrode (11, 12).

3. The electrode cutting device according to claim 2, wherein the planned cutting line (C) of the electrode (11, 12) is an imaginary line that connects grooves formed at each of first and second opposite end portions of the electrode (11, 12).

4. The electrode cutting device according to claim 1, wherein the control unit (114, 314) is configured to adjust the cutting angle of the cutter by the misaligned angle of the electrode (11, 12) so that the cutter (113c, 313c) is configured to cut the electrode (11, 12) along a planned cutting line (C) of the electrode (11, 12).

5. The electrode cutting device according to claim 1, wherein the cutting unit(113, 313) includes a first rail (113r) and a second rail (313r) spaced apart from each other in a direction perpendicular to the transfer direction of the electrode (11, 12), a body (113b, 313b) extending between the first rail (113r) and the second rail (313r) and connected to each of the first rail (113r) and the second rail (313r), the cutter (113c, 313c) disposed on the body (113b, 313b), a gripper (113g, 313g) disposed on the body (113b, 313b) and configured to fix a position of the electrode (11, 12) relative to the body (113b, 313b), and a first motor (113m) and a second motor (313m) that each are configured to supply power to move the body (113b, 313b) along each of the first rail (113r) and the second rail (313r).

6. A cell manufacturing device, comprising:
first and second electrode cutting devices, at least one of the first or second electrode cutting devices being an electrode cutting device according to claim 1, the electrode of the first cutting device being a first electrode (11), the electrode of the second cutting device being a second electrode (12);
a first matching unit (210) configured to match the first electrode (11) after it is cut with a separator (21) to form a first matched product (31); and
a second matching unit (410) configured to match the second electrode (12) after it is cut with the first matched product (31) to form a second matched product (32).

7. The cell manufacturing device according to claim 6, wherein the second matching unit (410) includes a matching vision unit (112, 312) configured to measure at least one of the cutting angle or the misaligned angle of each of the first electrode (11) and the second electrode (12) of the second matched product (32).

8. The cell manufacturing device according to claim 7, wherein the matching vision unit (112, 312) is configured to measure an angle formed by a planned cutting line (C) of each of the first electrode (11) and the second electrode (12) and an actual cutting line (R) of each of the first electrode (11) and the second electrode (12) so as to measure the cutting angle of each of the first electrode (1) and the second electrode (2).

9. The cell manufacturing device according to claim 7, wherein a control unit (114) of the first electrode cutting device (110) is configured to adjust the cutting angle of the cutter (113c) included in the first electrode cutting device (110) additionally based on the cutting angle of the first electrode (11) measured by the matching vision unit (413), and
the control unit (314) of the second electrode cutting device is configured to adjust the cutting angle of the cutter (313c) included in the second electrode cutting device additionally based on the cutting angle of the second electrode (12) measured by the matching vision unit (413).

10. The cell manufacturing device according to claim 7, wherein the matching vision unit (413) is configured to measure an angle formed by an imaginary line perpendicular to a transfer direction of the second matched product (32) and a side that connects first and second opposite end portions of each of the first electrode (11) and the second electrode (12) so as to measure the misaligned angle of each of the first electrode (11) and the second electrode (12).

11. The cell manufacturing device according to claim 7, wherein the first electrode cutting device further includes a gripper (113g) that is configured to fix a position the first electrode (11) relative to the cutter (113c) of the first electrode cutting device, and the first electrode cutting device is configured to feed the first electrode (11) after it is cut to the first matching unit (210),
the control unit (114) of the first electrode cutting device is configured to adjust a feeding angle of the gripper (113g) by the misaligned angle of the first electrode (11) measured by the matching vision unit (413), and
the feeding angle of the gripper (113g) is an angle formed by a side that connects first and second opposite end portions of the first electrode (11) fixed by the gripper (113g) and an imaginary line perpendicular to the feeding direction (f) of the first electrode (11).

12. The cell manufacturing device according to claim 7, wherein the second electrode cutting device further includes a gripper (313g) that is configured to fix a position of the second electrode (12) relative to the cutter (313c) of the second electrode cutting device, and the second electrode cutting device is configured to feed the second electrode (12) after it is cut to the second matching unit (410),
the control unit (313) of the second electrode cutting device is configured to adjust a feeding angle of the gripper (313g) by the misaligned angle of the second electrode (12) measured by the matching vision unit (413), and
the feeding angle of the gripper (313g) is an angle formed by a side that connects first and second opposite end portions of the second electrode (12) fixed by the gripper (313g) and an imaginary line perpendicular to the feeding direction (f) of the second electrode (12).

## Patentansprüche

1. Elektroden-Schneidvorrichtung, umfassend:
eine Transfereinheit (111, 311), welche dazu eingerichtet ist, eine Elektrode (11, 12) zu transferieren;
eine Sichteinheit (112, 312), welche dazu eingerichtet ist, einen Fehlausrichtung-Winkel der Elektrode (11, 12) zu messen;
eine Schneideinheit (113, 313), welche eine Schneide (113c, 313c) umfasst,
welche dazu eingerichtet ist, die Elektrode (11, 12) zu schneiden; und
eine Steuereinheit (114, 314), welche dazu eingerichtet ist, die Schneide (113c, 313c) zu steuern,
wobei die Steuereinheit (114, 314) dazu eingerichtet ist, einen Schneidwinkel der Schneide (113c, 313c) auf Grundlage des Fehlausrichtung-Winkels der Elektrode (11, 12) anzupassen,
wobei der Schneidwinkel der Schneide (113c, 313c) ein Winkel ist, welcher durch eine Klinge der Schneide (113c, 313c) und eine imaginäre Linie senkrecht zu einer Transferrichtung der Elektrode gebildet ist.

2. Elektroden-Schneidvorrichtung nach Anspruch 1,
wobei die Sichteinheit (112, 312) dazu eingerichtet ist, einen Winkel zu messen, welcher durch eine geplante Schneidlinie (C) der Elektrode (11, 12) und die imaginäre Linie senkrecht zu der Transferrichtung der Elektrode (11, 12) gebildet ist, um den Fehlausrichtung-Winkel der Elektrode (11, 12) zu messen.

3. Elektroden-Schneidvorrichtung nach Anspruch 2, wobei die geplante Schneidlinie (C) der Elektrode (11, 12) eine imaginäre Linie ist, welche Nuten verbindet, welche an jedem aus ersten und zweiten gegenüberliegenden Endabschnitten der Elektrode (11, 12) gebildet sind.

4. Elektroden-Schneidvorrichtung nach Anspruch 1, wobei die Steuereinheit (114, 314) dazu eingerichtet ist, den Schneidwinkel der Schneide um den Fehlausrichtung-Winkel der Elektrode (11, 12) anzupassen, so dass die Schneide (113c, 313c) dazu eingerichtet ist, die Elektrode (11, 12) entlang einer geplanten Schneidlinie (C) der Elektrode (11, 12) zu schneiden.

5. Elektroden-Schneidvorrichtung nach Anspruch 1, wobei die Schneideinheit (113, 313) eine erste Schiene (113r) und eine zweite Schiene (313r), welche voneinander in einer Richtung senkrecht zu der Transferrichtung der Elektrode (11, 12) beabstandet sind, einen Körper (113b, 313b), welcher sich zwischen der ersten Schiene (113r) und der zweiten Schiene (313r) erstreckt und mit jeder aus der ersten Schiene (113r) und der zweiten Schiene (313r) verbunden ist, die Schneide (113c, 313c), welche an dem Körper (113b, 313b) angeordnet ist, einen Greifer (113g, 313g), welcher an dem Körper (113b, 313b) angeordnet und dazu eingerichtet ist, eine Position der Elektrode (11, 12) relativ zu dem Körper (113b, 313b) zu fixieren, und einen ersten Motor (113m) und einen zweiten Motor (313m) umfasst, welche dazu eingerichtet sind, Leistung zu liefern, um den Körper (113b, 313b) entlang jeder aus der ersten Schiene (113r) und der zweiten Schiene (313r) zu bewegen.

6. Zellen-Herstellungsvorrichtung, umfassend:
erste und zweite Elektroden-Schneidvorrichtungen, wobei wenigstens eine aus der ersten oder zweiten Elektroden-Schneidvorrichtung eine Elektroden-Schneidvorrichtung nach Anspruch 1 ist, wobei die Elektrode der ersten Schneidvorrichtung eine erste Elektrode (11) ist, wobei die Elektrode der zweiten Schneidvorrichtung eine zweite Elektrode (12) ist;
eine erste Anpassungseinheit (210), welche dazu eingerichtet ist, die erste Elektrode (11), nachdem sie geschnitten wird, mit einem Separator (21) anzupassen, um ein erstes angepasstes Produkt (31) zu bilden; und
eine zweite Anpassungseinheit (410), welche dazu eingerichtet ist, die zweite Elektrode (12), nachdem sie geschnitten wird, mit dem angepassten ersten Produkt (31) anzupassen, um ein zweites angepasstes Produkt (32) zu bilden.

7. Zellen-Herstellungsvorrichtung nach Anspruch 6, wobei die zweite Anpassungseinheit (410) eine Anpassung-Sichteinheit (112, 312) umfasst, welche dazu eingerichtet ist, wenigstens eines aus dem Schneidwinkel oder dem Fehlausrichtung-Winkel von jeder aus der ersten Elektrode (11) und der zweiten Elektrode (12) des zweiten angepassten Produkts (32) zu messen.

8. Zellen-Herstellungsvorrichtung nach Anspruch 7, wobei die Anpassung-Sichteinheit (112, 312) dazu eingerichtet ist, einen Winkel zu messen, welcher durch eine geplante Schneidlinie (C) von jeder aus der ersten Elektrode (11) und der zweiten Elektrode (12) und einer tatsächlichen Schneidlinie (R) von jeder aus der ersten Elektrode (11) und der zweiten Elektrode (12) gebildet ist, um so den Schneidwinkel von jeder aus der ersten Elektrode (1) und der zweiten Elektrode (2) zu messen.

9. Zellen-Herstellungsvorrichtung nach Anspruch 7, wobei eine Steuereinheit (114) der ersten Elektroden-Schneidvorrichtung (110) dazu eingerichtet ist, den Schneidwinkel der Schneide (113c), welche in der ersten Elektroden-Schneidvorrichtung (110) umfasst ist, zusätzlich auf Grundlage des Schneidwinkels der ersten Elektrode (11) anzupassen, welcher durch die Anpassung-Sichteinheit (413) gemessen wird, und
die Steuereinheit (314) der zweiten Elektroden-Schneidvorrichtung dazu eingerichtet ist, den Schneidwinkel der Schneide (313c), welche in der zweiten Elektroden-Schneidvorrichtung umfasst ist, zusätzlich auf Grundlage des Schneidwinkels der zweiten Elektrode (12) anzupassen, welcher durch die Anpassung-Sichteinheit (413) gemessen wird.

10. Zellen-Herstellungsvorrichtung nach Anspruch 7, wobei die Anpassung-Sichteinheit (413) dazu eingerichtet ist, einen Winkel zu messen, welcher gebildet ist durch eine imaginäre Linie senkrecht zu einer Transferrichtung des zweiten angepassten Produkts (32) und einer Seite, welche erste und zweite gegenüberliegende Endabschnitte von jeder aus der ersten Elektrode (11) und der zweiten Elektrode (12) verbindet, um so den Fehlausrichtung-Winkel von jeder aus der ersten Elektrode (11) und der zweiten Elektrode (12) zu messen.

11. Zellen-Herstellungsvorrichtung nach Anspruch 7, wobei die erste Elektroden-Schneidvorrichtung einen Greifer (113g) umfasst, welcher dazu eingerichtet ist, eine Position der ersten Elektrode (11) relativ zu der Schneide (113c) der ersten Elektroden-Schneidvorrichtung zu fixieren, und die erste Elektroden-Schneidvorrichtung dazu eingerichtet ist, die erste Elektrode (11), nachdem sie geschnitten wird, zu der ersten Anpassungseinheit (210) zuzuführen,
die Steuereinheit (114) der ersten Elektroden-Schneidvorrichtung dazu eingerichtet ist, einen Zuführwinkel des Greifers (113g) um den Fehlausrichtung-Winkel der ersten Elektrode (11) anzupassen, welcher durch die Anpassung-Sichteinheit (413) gemessen wird, und
der Zuführwinkel des Greifers (113g) ein Winkel ist, welcher gebildet ist durch eine Seite, welche erste und zweite gegenüberliegende Endabschnitte der ersten Elektrode (11) verbindet, welche durch den Greifer (113g) fixiert sind, und eine imaginäre Linie senkrecht zu der Zuführrichtung (f) der ersten Elektrode (11).

12. Zellen-Herstellungsvorrichtung nach Anspruch 7, wobei die zweite Elektroden-Schneidvorrichtung ferner einen Greifer (313g) umfasst, welcher dazu eingerichtet ist, eine Position der zweiten Elektrode (12) relativ zu der Schneide (313c) der zweiten Elektroden-Schneidvorrichtung zu fixieren, und die zweite Elektroden-Schneidvorrichtung dazu eingerichtet ist, die zweite Elektrode (12), nachdem sie geschnitten wird, zu der zweiten Anpassungseinheit (410) zuzuführen,
die Steuereinheit (313) der zweiten Elektroden-Schneidvorrichtung dazu eingerichtet ist, einen Zuführwinkel des Greifers (313g) um den Fehlausrichtung-Winkel der zweiten Elektrode (12) anzupassen, welcher durch die Anpassung-Sichteinheit (413) gemessen wird, und
der Zuführwinkel des Greifers (313g) ein Winkel ist, welcher gebildet ist durch eine Seite, welche erste und zweite gegenüberliegende Endabschnitte der zweiten Elektrode (12) verbindet, welche durch den Greifer (313g) fixiert ist, und eine imaginäre Linie senkrecht zu der Zuführrichtung (f) der zweiten Elektrode (12).

## Revendications

1. Dispositif de découpe d'électrode, comprenant :
une unité de transfert (111, 311) configurée pour transférer une électrode (11, 12) ;
une unité de vision (112, 312) configurée pour mesurer un angle de désalignement de l'électrode (11, 12) ;
une unité de découpe (113, 313) comportant un couteau (113c, 313c) conçu pour découper l'électrode (11, 12) ; et
une unité de commande (114, 314) configurée pour commander le couteau (113c, 313c),
dans lequel l'unité de commande (114, 314) est configurée pour ajuster l'angle de découpe du couteau (113c, 313c) en fonction de l'angle de désalignement de l'électrode (11, 12), dans lequel
l'angle de découpe du couteau (113c, 313c) est l'angle formé par une lame du couteau (113c, 313c) et une ligne imaginaire perpendiculaire à la direction de transfert de l'électrode.

2. Dispositif de découpe d'électrode selon la revendication 1, dans lequel l'unité de vision (112, 312) est configurée pour mesurer un angle formé par une ligne de découpe (C) prédéfinie de l'électrode (11, 12) et la ligne imaginaire perpendiculaire à la direction de transfert de l'électrode (11, 12) afin de mesurer l'angle de désalignement de l'électrode (11, 12).

3. Dispositif de découpe d'électrode selon la revendication 2, dans lequel la ligne de découpe (C) prédéfinie de l'électrode (11, 12) est une ligne imaginaire reliant les rainures formées à chacune des première et seconde parties d'extrémité opposées de l'électrode (11, 12).

4. Dispositif de découpe d'électrode selon la revendication 1, dans lequel l'unité de commande (114, 314) est configurée pour ajuster l'angle de découpe du couteau en fonction de l'angle de désalignement de l'électrode (11, 12), de sorte que le couteau (113c, 313c) soit configuré pour découper l'électrode (11, 12) le long d'une ligne de découpe (C) prédéfinie de l'électrode (11, 12).

5. Dispositif de découpe d'électrode selon la revendication 1, dans lequel l'unité de découpe (113, 313) comporte un premier rail (113r) et un second rail (313r) espacés l'un de l'autre dans une direction perpendiculaire à la direction de transfert de l'électrode (11, 12), un corps (113b, 313b) s'étendant entre le premier rail (113r) et le second rail (313r) et relié à chacun des premier et second rails (113r, 313r), le couteau (113c, 313c) disposé sur le corps (113b, 313b), un préhenseur (113g, 313g) disposé sur le corps (113b, 313b) et conçu pour fixer la position de l'électrode (11, 12) par rapport au corps (113b, 313b), ainsi qu'un premier moteur (113m) et un second moteur (313m) qui sont chacun configurés pour fournir l'énergie nécessaire au déplacement du corps (113b, 313b) le long de chacun des premier et second rails (113r, 313r).

6. Dispositif de fabrication de cellule, comprenant :
des premier et second dispositifs de découpe d'électrode, au moins l'un des premier ou second dispositifs de découpe d'électrode étant un dispositif de découpe d'électrode selon la revendication 1, l'électrode du premier dispositif de découpe étant une première électrode (11), l'électrode du second dispositif de découpe étant une seconde électrode (12) ;
une première unité d'appariement (210) configurée pour apparier la première électrode (11) après qu'elle ait été découpée avec un séparateur (21) pour former un premier produit apparié (31) ; et
une seconde unité d'appariement (410) configurée pour apparier la seconde électrode (12) après qu'elle ait été découpée avec le premier produit apparié (31) pour former un second produit apparié (32).

7. Dispositif de fabrication de cellule selon la revendication 6, dans lequel la seconde unité d'appariement (410) comporte une unité de vision d'appariement (112, 312) configurée pour mesurer au moins l'un des angles de découpe ou l'angle de désalignement de chacune de la première électrode (11) et de la seconde électrode (12) du second produit apparié (32).

8. Dispositif de fabrication de cellule selon la revendication 7, dans lequel l'unité de vision d'appariement (112, 312) est configurée pour mesurer un angle formé par une ligne de découpe (C) prédéterminée de chacune de la première électrode (11) et de la seconde électrode (12) et une ligne de découpe (R) réelle de chacune de la première électrode (11) et de la seconde électrode (12) de manière à mesurer l'angle de découpe de chacune de la première électrode (1) et de la seconde électrode (2).

9. Dispositif de fabrication de cellule selon la revendication 7, dans lequel une unité de commande (114) du premier dispositif de découpe d'électrode (110) est configurée pour ajuster l'angle de découpe du couteau (113c) inclus dans le premier dispositif de découpe d'électrode (110) en fonction de l'angle de découpe de la première électrode (11) mesuré par l'unité de vision d'appariement (413), et
L'unité de commande (314) du second dispositif de découpe d'électrode est configurée pour ajuster l'angle de découpe du couteau (313c) inclus dans le second dispositif de découpe d'électrode en fonction de l'angle de découpe de la seconde électrode (12) mesuré par l'unité de vision d'appariement (413).

10. Dispositif de fabrication de cellule selon la revendication 7, dans lequel l'unité de vision d'appariement (413) est configurée pour mesurer un angle formé par une ligne imaginaire perpendiculaire à une direction de transfert du second produit apparié (32) et un côté qui relie les première et second parties d'extrémité opposées de chacune de la première électrode (11) et de la seconde électrode (12) de manière à mesurer l'angle de désalignement de chacune de la première électrode (11) et de la seconde électrode (12).

11. Dispositif de fabrication de cellule selon la revendication 7, dans lequel le premier dispositif de découpe d'électrode comporte en outre un préhenseur (113g) qui est configuré pour fixer une position de la première électrode (11) par rapport au couteau (113c) du premier dispositif de découpe d'électrode, et le premier dispositif de découpe d'électrode est configuré pour alimenter la première électrode (11) après qu'elle ait été découpée vers la première unité d'appariement (210),
l'unité de commande (114) du premier dispositif de découpe d'électrode est configurée pour ajuster un angle d'alimentation du préhenseur (113g) par l'angle de désalignement de la première électrode (11) mesuré par l'unité de vision d'appariement (413), et
l'angle d'alimentation du préhenseur (113 g) est un angle formé par un côté reliant les première et seconde parties d'extrémité opposées de la première électrode (11) fixée par le préhenseur (113 g) et une ligne imaginaire perpendiculaire à la direction d'alimentation (f) de la première électrode (11).

12. Dispositif de fabrication de cellule selon la revendication 7, dans lequel le second dispositif de découpe d'électrode comporte en outre un préhenseur (313g) qui est configuré pour fixer une position de la seconde électrode (12) par rapport au couteau (313c) du second dispositif de découpe d'électrode, et le second dispositif de découpe d'électrode est configuré pour alimenter la seconde électrode (12) après qu'elle ait été découpée vers la seconde unité d'appariement (410),
l'unité de commande (313) du second dispositif de découpe d'électrode est configurée pour ajuster un angle d'alimentation du préhenseur (313g) par l'angle de désalignement de la seconde électrode (12) mesuré par l'unité de vision d'appariement (413), et
l'angle d'alimentation du préhenseur (313g) est un angle formé par un côté qui relie les première et seconde parties d'extrémité opposées de la seconde électrode (12) fixées par le préhenseur (313g) et une ligne imaginaire perpendiculaire à la direction d'alimentation (f) de la seconde électrode (12).
